# EUROPÄISCHE PATENTSCHRIFT

(11) **EP 3 137 195 B1**
(45) Veröffentlichungstag und Bekanntmachung des Hinweises auf die Patenterteilung: **15.04.2020**
(21) Anmeldenummer: 15760373.9
(22) Anmeldetag: 26.08.2015
(51) Int. Cl.: B01D 65/10, G01N 15/08, B01D 71/36

(54) **VERFAHREN UND VORRICHTUNG ZUR DURCHFÜHRUNG EINER INTEGRITÄTSPRÜFUNG EINES FILTERELEMENTS**
METHOD AND DEVICE FOR CARRYING OUT AN INTEGRITY TEST ON A FILTER ELEMENT
PROCÉDÉ ET DISPOSITIF POUR RÉALISER UN TEST D'INTÉGRITÉ D'UN ÉLÉMENT FILTRANT

(30) Priorität: 29.08.2014 DE 102014012784
(43) Veröffentlichungstag der Anmeldung: 08.03.2017
(73) Patentinhaber: Sartorius Stedim Biotech GmbH, 37079 Göttingen (DE)
(72) Erfinder: ARMGART, Dieter, 37186 Moringen (DE); LEISER, Dirk, 38126 Braunschweig (DE); RAKEBRANDT, Vanessa, 37139 Adelebsen (DE); VAN DEN BOOGAARD, Jürgen, 37127 Dransfeld (DE)
(74) Vertreter: Müller-Boré & Partner Patentanwälte PartG mbB
(86) Internationale Anmeldenummer: PCT/EP2015/001740
(87) Internationale Veröffentlichungsnummer: WO 2016/030013

(56) Entgegenhaltungen:
- EP-A1- 2 425 886
- DE-A1- 10 227 160
- DE-A1- 19 503 311
- DE-A1-102011 111 050
- US-A- 5 786 528

## Beschreibung

Die vorliegende Erfindung betrifft ein Verfahren und eine Vorrichtung zur Prüfung der Integrität von Filterelementen, insbesondere von Filterelementen für die Sterilfiltration.

In vielen Bereichen der Technik, insbesondere in der pharmazeutischen Industrie, der Lebensmittelproduktion, der elektronischen Industrie etc. werden Filtrationssysteme zur Sterilfiltration von Gasen und Flüssigkeiten eingesetzt. Zur Sterilfiltration kommen Sterilfilter mit Membranen aus unterschiedlichen Polymeren zum Einsatz. Bei der Sterilfiltration von Gasen und bei der sterilen Belüftung von Behältern, insbesondere in der pharmazeutischen Industrie, werden standardmäßig Sterilfilter mit hydrophoben Membranen wie z.B. Membranen auf Basis von Polytetrafluorethylen (kurz: PTFE) eingesetzt.

Herkömmliche Prüfverfahren von hydrophoben Filterelementen werden entweder mit Alkohol benetzt und im einstelligen Minutenbereich auf Diffusion/Bubble Point gemessen mit den bekannten Nachteilen des Nachtrocknens. Bei einem zweiten Prüfverfahren werden die hydrophoben Filter mit Wässer druckbeaufschlagt und im zweistelligen Minutenbereich auf Waterflow oder Water Intrusion getestet. Mit dem WFT und WFI können nur Filterflächen größer gleich als 900 cm² gemessen werden. Kleinere Filterflächen müssen mit Alkohol benetzt werden mit den bekannten Nachteilen.

Bisherige Prüftechnologien im einstelligen Minutenbereich für Sterilfilter basieren auf einer Druckanstiegsmessung an einer Ausgangsseite bzw. Druckabfallmessung auf der Eingangsseite eines plissierten, mit einem Isopropanol-Wasser-Gemisch benetzten PTFE-Filterelements. Aus dem gemessenen Druckanstieg bzw. Druckabfall kann bei gegebenem Volumen eine Diffusion durch das Filterelement berechnet werden. Diese Prüftechnologie zählt zu den indirekten Prüfverfahren und weist die Nachteile auf, dass das Prüfverfahren temperaturabhängig ist und ein Referenzvolumen zur Durchführung der Messung benötigt. Das bekannte Verfahren hat weiterhin den Nachteil, dass das Filterelement für die Messung mit Alkohol benetzt werden muss. Dadurch wird ein abschließender Trocknungsprozess in explosionsgeschützten Trockenschränken erforderlich, was ca. 8 Stunden dauern kann.

Aus der DE 102 27 160 A1 ist ein Verfahren zur Durchführung eines Integritätstest von Filtern auf Basis der Messung eines flüssigen Massenstroms bei konstantem Druck bekannt. Nach der Befüllung des Filtergehäuses wird ein Arbeitsdruck im System aufgebaut und der Messvorgang bei quasikonstantem Durchfluss des Fluids durch den Filter gestartet, wobei eine Durchflussmesszelle vor dem Filtergehäuse den Fluiddurchfluss misst.

Die DE 195 03 311 A1 offenbart eine Vorrichtung zur Prüfung der Integrität von gehäuseartig umschlossenen Filterelementen mithilfe eines Wasserinstrusionstest, wobei das herangezogene Messprinzip auf dem Druckabfall im Filtergehäuse basiert, der durch einen Drucksensor registriert wird.

Weiterhin lehrt die DE 10 2011 111 050 A1 ein Filterintegritätsprüfverfahren auf Basis der Messung eines Fluidmassenstroms, wobei ein gravimetrisches Messverfahren herangezogen wird.

Ein Prüfungsverfahren, das auf die Verwendung von Alkohol verzichtet, ist der so genannte Water-Flow-Test (kurz: WFT). Dabei kann auf eine Benetzung des Filterelements mit Alkohol verzichtet werden, wenn als Prüfmedium RO-Wasser verwendet wird. RO-Wasser ist ein vollentsalztes Wasser. Aufgrund der Hydrophobizität von PTFE ist das Filterelement nach dem Abschluss des Prüfprozesses weitgehend trocken, so dass sich der anschließende Trocknungsprozess stark verkürzen lässt.

Beim WFT wird das PTFE-Filterelement in einem Behälter positioniert, der eingangsseitig komplett mit RO-Wasser gefüllt wird. Während des Prüfvorgangs wird mittels des RO-Wassers ein Prüfdruck unterhalb eines filterspezifischen Intrusionsdruckes von Wasser aufgebaut, der zu einem Druckabfall in einem zuvor ermittelten Referenzvolumen führt. Aus dem gemessenen Druckabfall wird die Menge an RO-Wasser berechnet, die in einem vorgegebenen Zeitintervall durch die Membran des PTFE-Filterelements gedrückt wurde. Um einen messbaren Druckabfall zu erzeugen, sind Prüfzeiten im zweistelligen Minutenbereich von üblicherweise 23 Minuten pro Prüfling notwendig, weswegen sich das WFT-Verfahren nicht in einem industriellen Maßstab und nicht für das Prüfen von sehr kleinen Filterelementen eignet. Das WFT-Verfahren ist temperaturabhängig und ermittelt die Integrität des zu prüfenden Filterelements nur indirekt über eine vorherige Nettovolumenmessung.

Der Erfindung liegt die Aufgabe zugrunde, eine verbesserte Integritätsprüfung von Filterelementen zu ermöglichen. Insbesondere sollen die Nachteile des WFT-Verfahrens wie z.B. die lange Messzeit, die begrenzte Messgenauigkeit und/oder der eingeschränkte Anwendungsbereich reduziert werden.

Diese Aufgabe wird durch die Gegenstände der unabhängigen Ansprüche gelöst.

Ein Aspekt betrifft ein Verfahren zur Durchführung einer Integritätsprüfung eines Filterelements nach Anspruch 1.

Damit wird ein Testverfahren bereitgestellt, mit dem ein WFT im einstelligen Minutenbereich durchgeführt werden kann und mit dem zudem auch Filterflächen getestet werden können, die kleiner als 900 cm² ausgebildet sind.

Mit dem Verfahren wird die Integrität des zumindest einen Filterelements überprüft, das insbesondere als ein PTFE-Filterelement und/oder Sterilfilterelement der eingangs beschriebenen Art ausgebildet sein kann. Der Behälter kann eingangsseitig mit dem Fluid gefüllt werden. Das Filterelement kann ausgangsseitig so im Behälter angeordnet sein, dass das Fluid den Behälter nur verlässt, nachdem das Fluid das Filterelement durchdrungen hat, z.B. durch Verdunstung. Ein zusätzliches Auslassventil kann vorgesehen sein, um das Fluid bei Abbruch und/oder nach dem Ende des Integritätstest aus dem Behälter ablassen zu können.

Als Fluid kann dafür ein wässriges Fluid wie zum Beispiel RO-Wasser, also vollentsalztes Wasser, verwendet werden. Bei dem Verfahren wird zunächst der Behälter zumindest teilweise mit dem Fluid gefüllt. Der Füllvorgang kann insbesondere mit einem spezifischen (vorgegebenen oder vorgebbaren) Fülldruck erfolgen, der kleiner als der spezifische (vorbestimmte oder vorbestimmbare) Prüfdruck ist.

Beim Einstellen des Fluids wird im Behälter ein spezifischer (vorbestimmter oder vorbestimmbarer) Prüfdruck eingestellt, wobei ein Kompaktieren des Filterelements beginnt. Dies kann zum Beispiel durch eine Beaufschlagung des Fluids mit Druckluft erfolgen. Der spezifische (vorbestimmte oder vorbestimmbare) Prüfdruck ist dabei kleiner als der Intrusionsdruck des Filterelements. Der spezifische (vorbestimmte oder vorbestimmbare) Prüferdruck kann auf das Filterelement abgestimmt sein und somit filterspezifisch vorbestimmt sein.

Während des Einstellens kann bereits eine Grobleckprüfung durchgeführt werden. Dabei wird überprüft, ob das Filterelement eine vorbestimmte Menge an Fluid durchlässt, die bereits beim Kompaktieren des Filterelements darauf schließen lässt, dass das Filterelement den Integritätstest nicht bestehen wird. In diesem Fall kann die Integritätsprüfung des Filterelements abgebrochen werden. Beim Kompaktieren des Filterelements kann insbesondere dann besonders viel Fluid durch das Filterelement gedrückt werden, wenn das Filterelement beschädigt ist und somit einen reduzierten Intrusionsdruck aufweist.

Beim Verfahren wird während der Bestimmung der Integritätskenngröße der spezifische (vorbestimmte oder vorbestimmbare) Prüfdruck im Behälter aufrechterhalten. Da während des Bestimmens eine gewisse geringe Fluidmenge durch das Filterelement dringt, wird diese Fluidmenge in den Behälter nachgefüllt, um den spezifischen (vorbestimmten oder vorbestimmbaren) Prüfdruck im Behälter aufrecht zu erhalten. In einigen Ausführungsbeispielen kann sowohl ein kontrolliertes Nachfüllen von Fluid als auch ein kontrolliertes Verändern des Innenvolumens des Behälters vorgesehen sein und durchgeführt werden.

Veränderung des Innenvolumens des Behälters bedeutet dabei, dass das für das Fluid im Innenraum des Behälters zur Verfügung stehende Innenvolumen verändert wird, insbesondere kontrolliert reduziert wird.

Dieses Nachfüllen von Fluid erfolgt auf eine kontrollierte Art und Weise. Dies bedeutet, dass genau überprüft werden kann, wieviel Fluid in den Behälter nachgefüllt werden muss und/oder um wie viel das Innenvolumen des Behälters verändert (insbesondere reduziert) werden muss, um den vorbestimmten Prüfdruck darin aufrecht zu erhalten. Somit kann direkt während des Nachfüllens z.B. die Menge (und/oder das Volumen) an Fluid bestimmt werden, das bei Aufrechterhaltung des spezifischen (vorbestimmten oder vorbestimmbaren) Prüfdrucks das Filterelement durchdringt. Alternativ kann auch eine andere Maßzahl bestimmt werden, die von dieser Fluidmenge abhängt, wie z.B. die Anzahl von Inkrementschritten eines Reglers, der das Fluid in den Behälter nachfüllt und/oder der die Veränderung des Innenvolumens bewirkt. Das Innenvolumen des Behälters kann z.B. durch Eindringen und/oder Einführen eines Verdrängungskörpers in den Innenraum des Behälters verändert werden. Die Eindringtiefe des Verdrängungskörpers in den Innenraum kann z.B. von einem Regler angesteuert und/oder kontrolliert werden. Das Volumen des Verdrängungskörpers, das zu einem ausgewählten Zeitpunkt in den Innenraum des Behälters eingeführt ist, entspricht dem Gesamtvolumen an Fluid, das seit Testbeginn durch das Filterelement gedrungen ist.

Während der vorbestimmte Prüfdruck aufrechterhalten wird, wird somit gleichzeitig die Integritätskenngröße für das Filterelement bestimmt. Die Integritätskenngröße kann dabei jegliche die Integrität des Filterelements kennzeichnende Entität umfassen, wie z.B. eine Variable, ein Flag, eine Zahl, einen Wert und/oder eine logische Angabe. Die Integritätskenngröße kann davon abhängen, welcher kontinuierliche Volumenstrom an Fluid benötigt wird, um den spezifischen (vorbestimmten oder vorbestimmbaren) Prüfdruck aufrecht zu erhalten. Dabei kann als Integritätskenngröße z.B. ein Volumenstrom durch das Filterelement, eine Änderung des Volumens pro Zeiteinheit, eine Änderung des Volumenstroms (also die zweite Ableitung des Volumens nach der Zeit), und/oder eine Anzahl von Inkrementschritten bestimmt und/oder ausgewertet werden.

Zusätzlich kann z. B. mittels eines Temperatursensors die Temperatur des Fluids gemessen werden, um die Integritätsprüfung temperaturunabhängig auszuführen. Es kann auch zugleich der Druck, das absolute Volumen und die Temperatur gemessen werden.

Ziel des Verfahrens ist dabei nicht notwendigerweise die Messung einer exakten Integritätskenngröße, also z.B. die Messung des exakten sich einstellenden kontinuierlichen Volümenstroms. Das Verfahren kann lediglich zu der Aussage führen, ob das Filterelement den Integritätstest bestehen wird oder nicht. Dazu gehört die Aussage, ob die prognostizierte bzw. abgeschätzte Integritätskenngröße unterhalb eines filterspezifischen und/oder vordefinierten Integritätsgrenzwerts für den zu prüfenden Filtertyp liegen wird oder nicht.

Dabei wird die Integritätskenngröße für das Filterelement bestimmt, bevor sich ein im Wesentlichen kontinuierlicher Volumenstrom an Fluid einstellt, der zum Aufrechterhalten des spezifischen Prüfdrucks im Behälter benötigt wird. Bis zum Einstellen des kontinuierlichen Volumenstroms vergehen oft 23 oder mehr Minuten, was (wie eingangs beschrieben) zu langen Prüfzeiten führt. Die Bestimmung der Integritätskenngröße erfolgt beim Verfahren jedoch wesentlich früher, nämlich bereits während sich der Volumenstrom noch ändert.

"Im Wesentlichen konstanter Volumenstrom" bedeutet hierbei, dass sich der Volumenstrom kaum noch verändert. Dies kann insbesondere bedeuten, dass sich der Volumenstrom höchstens um 20% pro Minute ändert, bevorzugt höchstens um 10% pro Minute ändert, besonderes bevorzugt höchstens um 5% pro Minute ändert, besonders bevorzugt um höchstens 1% pro Minute ändert. Regelmäßig tritt ein im Wesentlichen konstanter Volumenstrom auf, sobald das Filterelement kompaktiert ist.

Gemäß einer Ausführungsform hängt die Integritätskenngröße ab von zumindest einem Charakteristikum des Volumenstroms an Fluid, der zum Aufrechterhalten des spezifischen Prüfdrucks im Behälter benötigt wird. Das Charakteristikum kann z.B. eine erste und/oder zweite Ableitung des Volumenstroms nach der Zeit sein. Das Charakteristikum ist abhängig von der Änderung des Volumenstroms. Das Charakteristikum des Volumenstroms für das zu prüfenden Filterelement kann mit einem vorgegebenen Wert des Charakteristikums für den zu erwartenden Volumenstrom unter dem spezifischen Prüfdruck für ein Filterelement desselben Typs bzw. derselben Bauart verglichen werden. Weicht der mittels des Charakteristikums bestimmte und/oder abgeschätzte Volumenstrom zu stark von dem vorgegebenen Wert für den Filtertyp ab, so besteht das geprüfte Filterelement den Test nicht. Weicht der ermittelte Volumenstrom nur leicht bzw. gar nicht von dem vorgegebenen Wert für den Filtertyp ab, so besteht das geprüfte Filterelement den Integritätstest.

Gemäß einer Ausführungsform wird die Integritätskenngröße ermittelt, bevor das Filterelement kompaktiert ist. Die Kompaktierung des Filterelements kann bereits ab Einfüllen des Fluids beginnen. Die Kompaktierung des Filterelements ist jedoch erst nach einem gewissen Zeitraum abgeschlossen, für den das Fluid im Behälter auf dem spezifischen Prüfdruck von z.B. 2,5 bar gehalten wird. Erst danach stellt sich ein kontinuierlicher Volumenstrom durch das Filterelement ein. Die Kompaktierung des Filterelements ist bei üblichen Messungen ca. 10 Minuten nach Beginn des Einfüllens des Fluids weitestgehend abgeschlossen. Mit dem Verfahren kann die Integritätskenngröße des Filterelements bereits vor diesem Zeitpunkt bestimmt werden, also noch während das Filterelement weiter kompaktiert wird.

Gemäß einer Ausführungsform wird die Integritätskenngröße innerhalb von maximal neun Minuten nach Beginn des Füllens des Behälters bestimmt, bevorzugt innerhalb von maximal fünf Minuten. Dieser kurze Zeitraum im einstelligen Minutenbereich ist bereits ausreichend, um den sich einstellenden kontinuierlichen Volumenstrom durch das Filterelement abzuschätzen, auch wenn sich dieser üblicherweise erst nach ca. 23 Minuten einstellt.

Gemäß einer Ausführungsform erfolgt die kontrollierte Innenvolumenänderung des Behälters mittels eines in den Behälter eindringenden und/oder einbringbaren Verdrängungskörpers. Dabei wird die Aufrechterhaltung des Prüfdruckes direkt im Behälter durch den Verdrängungskörper bewirkt, dessen Eindringvolumen das Volumen an Fluid bestimmt, welches durch Kompaktierung und Verdunstung kleiner geworden ist. Der Verdrängungskörper kann z.B. als Verdrängungskolben ausgebildet sein, insbesondere als Verdrängungskolben einer Druckmesszelle, der kontrolliert in den Innenraum des Behälters eindringt. In dieser Ausführungsform kann eine Druckmesszelle in den Prüfbehälter integriert sein, die den Verdrängungskörper bereitstellt.

Gemäß einer Ausführungsform erfolgt das kontrollierte Nachfüllen von Fluid in den Behälter mittels einer Druckmesszelle. Alternativ oder zusätzlich kann die Veränderung des Innenvolumens des Behälters mittels einer Druckmesszelle erfolgen, die intern in den Behälter integriert ist. Die Druckmesszelle kann einerseits den vorbestimmten Prüfdruck im Behälter aufrechterhalten und andererseits während des Aufrechterhaltens des Prüfdrucks das Volumen von Fluid messen, das dazu benötigt wird. Die Messung erfolgt mit einer Genauigkeit von etwa 0,1 µl bis etwa 10 µl, bevorzugt von etwa 1 µl bis etwa 5 µl. Dazu kann in der Druckmesszelle ein gewisses Fluidvolumen vorgespeichert sein, das während des Verfahrensschritts des Aufrechterhaltens des Prüfdrucks an den ersten Behälter abgegeben wird.

Dabei kann mittels eines Schrittmotors der Druckmesszelle ein Druckkolben so betätigt werden, dass im Behälter der spezifische Prüfdruck aufrechterhalten wird. Der Schrittmotor kann insbesondere als ein in die Druckmesszelle integrierter Präzisionsschrittmotor ausgebildet sein. Anstelle eines Druckabfalls an einem Nettovolumen im Behälter wird über einen mit dem Fluid gefüllten Zylinder des Druckkolbens und mit Hilfe des Schrittmotors der spezifische Prüfdruck als Solldruck im Behälter aufrechterhalten. Die sich einstellende Volumendifferenz wird ausgeregelt und dabei bestimmt und/oder ausgewertet. Über die Anzahl der zum Ausregeln benötigten Inkremente des Schrittmotors und die Maße des Querschnitts des Druckkolbens, also zum Beispiel seines Zylinderquerschnitts, lässt sich z.B. der zum Ausregeln benötigte Volumenstrom ermitteln.

Gemäß einer Ausführungsform wird die Integritätskenngröße durch eine mathematische Abschätzung bestimmt. Dabei wird z.B. abgeschätzt, welcher kontinuierliche Volumenstrom des Fluids sich einstellt, wenn der spezifische Prüfdruck im Behälter aufrechterhalten wird. Dabei kann direkt das Volumen pro Zeit gemessen werden, das zur Aufrechterhaltung des Prüfdrucks in den Behälter eingefüllt wird. Damit ist das Verfahren ein direktes Prüfverfahren, bei dem der Volumenstrom direkt gemessen werden kann.

Die Abschätzung kann so erfolgen, dass aus den einzelnen Messwerten für Volumen und Zeit für jeden Messzeitpunkt ein gleitender inkrementeller Volumenstrom, also eine Steigung der Volumenkennlinie, berechnet wird. Der zeitliche Kurvenverlauf der Volumenkennlinie ist normalerweise degressiv fallend. Zusätzlich zum gleitenden Volumenstrom kann die gleitende zeitliche Ableitung des Volumenstroms berechnet werden, also die Krümmung der Volumenkennlinie. Sobald die zeitliche Ableitung des Volumenstroms, also die Krümmung der Volumenkennlinie, gegen Null geht, kann dies als Maß für die Integrität des zu prüfenden ersten Filterelements verwendet werden, also z.B. als Integritätskenngröße. Der sich einstellende kontinuierliche Volumenstrom dient als Maß, Kennzahl bzw. Kenngröße für die Integrität und somit für die Qualität des Filterelements.

Üblicherweise dauert es lange, bis sich ein kontinuierlicher Volumenstrom einstellt. Der Vorgang kann sich insbesondere über einen Zeitraum von mehreren Stunden erstrecken. Um die Testzeit zu verkürzen, erfolgt die Bewertung des Filterelements als Prüfling zu einem deutlich früheren Zeitpunkt, indem nämlich der Integritätstest beendet wird, lange bevor der kontinuierliche Volumenstrom exakt ermittelt ist. Zur Durchführung der Integritätsprüfung ist es hinreichend, z.B. mathematisch abzuschätzen, welcher kontinuierliche Volumenstrom erwartet wird. Die Abschätzung kann z.B. anhand eines Charakteristikums des Volumenstroms erfolgen und mittels unterschiedlicher mathematischer Abschätzmethoden der Kurvenentwicklung durchgeführt werden. Durch die Auswertung der Messwerte kann bereits nach wenigen Minuten eine hinreichend genaue Abschätzung erfolgen.

Das Abschätzen kann somit insbesondere eine Prognose beinhalten.

Gemäß einer Ausführungsform wird die Integritätsprüfung beendet, wenn die Abschätzung ergibt, dass das zu prüfende Filterelement die Integritätsprüfung mit einer vorbestimmten Wahrscheinlichkeit besteht oder nicht besteht. Zur Abschätzung ist somit eine Prognose ausreichend, ob die Integritätsprüfung voraussichtlich bestanden wird oder nicht. Ein exaktes Bestimmen des sich einstellenden kontinuierlichen Volumenstroms als Prüfwert bzw. Integritätskenngröße für die Integrationsprüfung ist nicht notwendig. Das Verfahren kann bereits abgebrochen werden, wenn die Integritätskenngröße bzw. der prognostizierte kontinuierliche Volumenstrom mit einer vorbestimmten Wahrscheinlichkeit innerhalb eines vorbestimmten Grenzwerts liegt.

Gemäß einer Ausführungsform erfolgt die Abschätzung durch eine mathematische Prognose eines sich einstehenden Volumenstroms des Fluids mittels Hüllkurven, wobei die Hüllkurven auf das zu prüfende Filterelement abgestimmt sind. Dabei kann der Volumenstrom und/oder die Volumenstromänderung mit durch Hüllkurven vorgegebenen Grenzwerten verglichen werden, woraus ein prognostizierter Integrationsmesswert ermittelt werden kann für den erwarteten, sich einstellenden Volumenstrom des Fluids zur Aufrechterhaltung des vorgegebenen Prüfdrucks im Behälter. Dabei können die Lage und die mathematische Beschreibung der Hüllkurven charakteristisch sein für den betrachteten Filtertyp des Filterelements. Die Hüllkurven können dabei auf Grundlage vorangegangener Messungen an diesem Filtertyp ermittelt werden und vorgegeben sein, zum Beispiel innerhalb einer 95%-Perzentile. Ein Bewertungszeitpunkt des zu prüfenden Filterelements kann sich dabei danach richten, inwieweit die aktuell ermittelten Messwerte bezüglich ihres Niveaus und des Kurvenverlaufs innerhalb der definierten Hüllkurven liegen und eine Prognose der finalen Integritätskenngröße erlauben.

Der Beginn der Messung kann dabei abhängig vom Stabilitäts- und Kompaktierungsverhalten des zu prüfenden Filterelements sein, kann aber bei Überschreitung einer unter Produktivitätsgesichtspunkten maximal tolerablen Kompaktierungszeit erzwungen werden.

Gemäß einer Ausführungsform wird die Integritätsprüfung mit einander zeitlich überlappenden Verfahrensschritten an mehreren unterschiedlichen Filterelementen durchgeführt. Dabei sind die einzelnen Verfahrensschritte voneinander getrennt und insbesondere getrennt voneinander durchführbar. Damit wird die Prüfungszeit pro geprüftes Filterelement verringert, da zugleich mehrere Filterelemente geprüft werden können, insbesondere zugleich drei Filterelemente.

In einer Weiterführung dieser Ausführungsform wird während des Aufrechterhaltens des spezifischen (vorbestimmten oder vorbestimmbaren) Prüfdrucks in einem ersten Behälter mit einem ersten zu prüfenden Filterelement unter kontrolliertem Nachfüllen von Fluid:
- Fluid in einem zweiten Behälter, in dem ein zu prüfendes zweites Filterelement angeordnet ist, eingestellt auf den spezifischen (vorbestimmten oder vorbestimmbaren) Prüfdruck und
- Fluid in einen dritten Behälter gefüllt, in dem ein zu prüfendes drittes Filterelement angeordnet ist.

Die Verfahrensschritte Füllen, Einstellen und Aufrechterhalten werden somit zeitlich versetzt zueinander an drei unterschiedlichen Behältern mit drei unterschiedlichen Filterelementen durchgeführt. Die Durchführung der Verfahrensschritte erfolgt zeitversetzt: Das Verfahren beginnt mit dem Füllen des ersten Behälters. Anschließend wird der erste Behälter eingestellt, während der zweite Behälter gefüllt wird. Während des Aufrechterhaltens des Prüfdrucks im ersten Behälter wird zugleich der zweite Behälter eingestellt und der dritte Behälter gefüllt. Anschließend wird der spezifische (vorbestimmten oder vorbestimmbaren) Prüfdrück im zweiten Behälter aufrechterhalten, während der dritte Behälter eingestellt wird. Im letzten Schritt wird der spezifische (vorbestimmten oder vorbestimmbaren) Prüfdrück im dritten Behälter aufrechterhalten.

Die Verfahrensschritte können zeitversetzt an drei unterschiedlichen Prüfstationen mit jeweils einem zu prüfenden Filterelementen durchgeführt werden. Dabei kann der Verfahrensschritt an einer Prüfstation immer zeitsynchron mit den Verfahrensschritten an den beiden anderen Prüfstationen umgetaktet werden, wobei der jeweils zeitkritischste Verfahrensschritt mit der längsten Prozesszeit der Taktgeber für das Umtakten der Verfahrensschritte ist. Damit wird in jeder Prozessphase sichergestellt, dass nur eine einzige Leitung zum jeweiligen Behälter geöffnet ist, nämlich die Leitung die dem jeweiligen Verfahrensschritt zugeordnet ist. Dies kann zum Beispiel durch Verwendung von ansteuerbaren Dreifachventilen sichergestellt werden, zum Beispiel durch Verwendung von Robolux-Ventilen, über die jeweils eine von drei unterschiedlichen Leitungen mit dem Behälter verbunden werden kann. Dadurch wird an jedem Behälter ein schnelles und totraumarmes Umtakten zwischen den Verfahrensschritten gewährleistet. Weiterhin können Wechselwirkungen zwischen den Prüfstationen untereinander vermieden werden.

In einer Weiterführung dieser Ausführungsform erfolgt das kontrollierte Nachfüllen von Fluid in den Behälter mit einer Genauigkeit von kleiner etwa 10 µl.

Ein Aspekt betrifft eine Vorrichtung zum Durchführen einer Integritätsprüfung eines Filterelements mit einem Behälter, in dem ein zu prüfendes Filterelement anordenbar ist, mit
- zumindest einer Leitung, mit der ein Fluid in den Behälter so einfüllbar ist, dass der Druck des Fluids auf einen spezifischen (vorbestimmten oder vorbestimmbaren) Prüfdruck einstellbar ist,
- einer Fluidzufuhr, die den spezifischen (vorbestimmten oder vorbestimmbaren) Prüfdruck im Behälter aufrecht erhält indem die Fluidzufuhr kontrolliert Fluid in den Behälter nachfüllt und/oder das Innenvolumen des Behälters kontrolliert verändert, und
- einem Auswertmittel, das in Abhängigkeit vom kontrolliert in den Behälter nachgefüllten Fluid und/oder in Abhängigkeit der kontrollierten Innenvolumenänderung im Behälter eine Integritätskenngröße für das Filterelement bestimmt bevor sich ein im Wesentlichen kontinuierlicher Volumenstrom an Fluid einstellt, der zum Aufrechterhalten des spezifischen Prüfdrucks im Behälter benötigt wird.

Die Vorrichtung kann anstelle einer einzigen Leitung z.B. eine Füllleitung zum Füllen des Behälters sowie eine Kompaktierleitung zum Einstellen des Fluids im Behälter aufweisen. Dabei kann die Füllleitung zum Beispiel an einem Anschluss mit einer Quelle von RO-Wasser verbunden sein, über den RO-Wasser in die Füllleitung gefüllt wird. Das Füllen des Behälters kann von unten nach oben erfolgen, um ein verwirbelungsfreies Füllen und eine sichere Entlüftung zu ermöglichen. Das Füllen kann beendet werden, wenn ein Füllstandsensor am Ausgang einer Entlüftungsleitung Wasserkontakt bekommt und einen Zulauf über ein Ventil schließt, wodurch die Füllleitung wieder vom Behälter getrennt werden kann. Die Entlüftungsleitung kann mit einem leichten Gefälle montiert sein, so dass sie in Richtung des Gefälles entleert. Durch diese Art des Füllens kann ermöglicht werden, dass beim Füllvorgang kein Druck oberhalb des spezifischen (vorbestimmten oder vorbestimmbaren) Prüfdrucks auftritt.

Das Filterelement kann ausgangsseitig so im Behälter angeordnet werden, dass das Fluid den Behälter nur verlässt, nachdem das Fluid das Filterelement durchdrungen hat, z.B. durch Verdunstung.

Das Auswertmittel kann zum Beispiel einen Prozessor aufweisen, wie zum Beispiel ein PC. Das Auswertmittel ist so programmiert, dass es die Integritätskenngröße für das zu prüfenden Filterelement bestimmt, durch eine Abschätzung eines sich einstellenden kontinuierlichen Volumenstroms an Fluid, der sich zur Aufrechterhaltung des spezifischen (vorbestimmten oder vorbestimmbaren) Prüfdrucks im Behälter einstellt. Diese Abschätzung erfolgt, bevor sich ein im Wesentlichen kontinuierlicher Volumenstrom an Fluid einstellt. Hierbei kann ein im Wesentlichen kontinuierlicher Volumenstrom als ein Volumenstrom angesehen werden, dessen inkrementelle Veränderung pro Zeiteinheit (bzw. dessen erste Ableitung) unterhalb eines speziellen (vorbestimmten bzw. vorbestimmbaren) Schwellwertes (z.B. kleiner als etwa 1% des entsprechenden Volumenstromes) liegt. Ferner ist es möglich, einen im Wesentlichen kontinuierlichen Volumenstrom als jenen Volumenstrom anzusehen, der sich nach einer hinreichenden Zeit (z.B. nach mehr als etwa 20 Minuten) bei einem integren Referenzfilter einstellt.

Die Fluidzufuhr ist als Fluidzufuhr zu dem Filterelement ausgebildet. Dabei kann die Fluidzufuhr außerhalb des Behälters als eine externe Fluidzufuhr ausgebildet sein (z.B. als Druckmesszelle), die dem im Behälter angeordneten Filterelement über eine Leitung Fluid zuführt. Die Fluidzufuhr kann alternativ oder zusätzlich als eine interne Fluidzufuhr ausgebildet sein, z.B. als ein Verdrängungskörper, der in den Innenraum des Behälters einbringbar und/oder einführbar ausgebildet ist.

Eine interne Fluidzufuhr weist den Vorteil auf, dass keine Leitungen zwischen der internen Fluidzufuhr und dem Behälter vorgesehen sein müssen, da der Verdrängungskörper z.B. so an einer Stelle der Behälterwand ausgebildet sein kann, dass er durch die Behälterwand hindurch in den Innenraum des Behälters einbringbar und/oder einführbar ist. Dabei kann der Verdrängungskörper fluiddicht durch die Behälterwand führbar ausgebildet sein.

Eine interne Fluidzufuhr kann einfach gereinigt und/oder bedampft werden.

In einer alternativen Ausführungsform einer externen Fluidzufuhr kann ein Verdrängungskörper an einer beliebigen Position außerhalb des Behälters in Berührkontakt zum Fluid so angeordnet sein, dass der Verdrängungskörper das Fluidvolumen vor Durchdringung des Filterelements kontrolliert reduziert. Das so verdrängte Fluid wird dem Behälter z.B. über eine Leitung zugeführt.

In einer Ausführungsform schätzt das Auswertmittel die Integritätskenngröße in Abhängigkeit von zumindest einem Charakteristikum des Volumenstroms an Fluid ab, der beim Aufrechterhalten des spezifischen Prüfdrucks benötigt wird.

Gemäß einer Ausführungsform füllt die Fluidzufuhr mit einer Genauigkeit von etwa 0,1 µl bis etwa 10 µl Fluid in den Behälter nach und/oder verändert das Innenvolumen des Behälters mit dieser Genauigkeit, bevorzugt von etwa 0,1 µl bis etwa 5 µl. Diese Genauigkeit beeinflusst die Genauigkeit der Bestimmung der Integritätskenngröße. Eine Druckmesszelle als Fluidzufuhr kann z.B. Fluid mit einer Genauigkeit von ca. 4 µl nachfüllen.

In einer Ausführungsform ist die Fluidzufuhr als Druckmesszelle mit einem Schrittmotor ausgebildet, der einen Kolben so betätigt, dass im Behälter der spezifische (vorbestimmte oder vorbestimmbare) Prüfdruck im Wesentlichen aufrechterhalten wird. Eine solche Druckmesszelle kann ein Gesamtvolumen von bis zu etwa 500 ml aufweisen.

Dabei kann das Auswertmittel eine Schrittzahl bzw. Index des Schrittmotors der Druckmesszelle als Kenngröße des Volumens an Fluid verwenden, das zur Aufrechterhaltung des spezifischen Prüfdrucks durch das Filterelement strömt.

In einer Ausführungsform ist die Fluidzufuhr als ein Verdrängungskörper ausgebildet, der kontrolliert in den Behälter eindringt und dabei das Innenvolumen des Behälters ändert. "Kontrolliert" bedeutet dabei, dass z.B. das Eindringvolumen und/oder die Eindringtiefe des Verdrängungskörpers in den Behälter ansteuerbar ist. Dabei kann der Verdrängungskörper als ein Verdrängungskolben ausgebildet sein, z.B. als Verdrängungskolben einer behälterinternen Druckmesszelle. Der Verdrängungskörper kann z.B. als ein Plungerzylinder ausgebildet sein, der einen vorbestimmten Zylinderquerschnitt aufweist und kontrolliert in Richtung seiner Zylinderachse in den Prüfbehälter einführbar ist. In einer solchen Ausführungsform kann das Eindringvolumen des Verdrängungskörpers mit einer Genauigkeit von etwa 0,1 µl bis etwa 10 µl bestimmt werden.

Gemäß einer Ausführungsform weist die Vorrichtung einen Kompaktierungsbehälter auf, der mit einer Kompaktierleitung verbunden ist, wobei der Kompaktierungsbehälter auf den spezifischen (vorbestimmten oder vorbestimmbaren) Prüfdruck kompaktiert ist. Die Kompaktierleitung kann zum Einstellen des Fluids im Behälter auf den spezifischen (vorbestimmten oder vorbestimmbaren) Prüfdruck ausgebildet und vorgesehen sein. Die Kompaktierung des Filterelements kann zum Beispiel bei ca. 2,5 bar erfolgen, wobei der Kompaktierungsbehälter als durchgeregelter Vorlagebehälter ausgebildet ist. Das Volumen des Kompaktierungsbehälters ist so dimensioniert, dass er mehrere Kompaktierungsvorgänge gleichzeitig durchführen kann, zum Beispiel bis zu drei zeitgleiche Kompaktierungsvorgänge an drei unterschiedlichen Behältern mit jeweils einem Filterelement.

Während des Kompaktiersvorgangs bzw. in Zusammenhang mit dem Kompaktierungsvorgang kann eine Grobleck-Prüfung des ersten Filterelements erfolgen, zum Beispiel über einen in der Kompaktierleitung integrierten Coreolis-Massenflusssensor, dessen Messbereich auf das Kompaktierungsvolumen der zu prüfenden Produktgruppe abgestimmt ist, nämlich des zu prüfenden Filterelements. Der Massenflusssensor ermöglicht weiterhin, zusätzlich zum Massenfluss die Dichte und Temperatur des Fluids aus dem Kompaktierungsbehälter zu messen. Übersteigt der Messwert des Massenflusssensors während des Kompaktierens dauerhaft einen vorgegebenen Wert, das heißt die Kompaktierung nimmt mit dem Zeitverlauf nicht wie erwartet ab, wird das zu prüfende Filterelement als Ausschuss mit einem Grobleck bewertet. Anschließend kann ein Umschalten vom Kompaktieren auf das Aufrechterhalten des Drucks und Messen unterbunden werden, um ein ungewolltes Entleeren der Druckmesszelle während der Messung zu vermeiden, da ansonsten die Druckmesszelle wieder aufgefüllt werden müsste.

Gemäß einer Ausführungsform weist die Vorrichtung einen Druckminderer und/oder einen Durchflussminderer auf, der den Druck und/oder den Durchfluss des Fluids in einer Füllleitung reduziert. Die Füllleitung kann zum Füllen des Behälters mit Fluid ausgebildet und vorgesehen sein. Der Druckminderer und/oder der Durchflussminderer sind in der Füllleitung integriert bzw. mit dieser so verbunden, dass sie den Druck des Fluids in der Füllleitung reduzieren können. Dadurch wird der Fluiddruck beim Füllen der Behälter unterhalb desspezifischen (vorbestimmten oder vorbestimmbaren) Prüfdrucks gehalten, der erst beim Kompaktieren eingestellt wird. Dabei kann das Füllen des jeweiligen Behälters direkt aus der Füllleitung über den zum Beispiel manuellen Druckminderer und den zum Beispiel nachgeschalteten Durchflussminderer erfolgen.

Gemäß einer Ausführungsform weist die Vorrichtung ein ansteuerbares Dreifachventil auf, über das entweder eine Füllleitung, eine Kompaktierleitung oder die Druckmesszelle an den Behälter anschließbar ist. Das ansteuerbare Dreifachventil ist dabei so ansteuerbar, dass jeweils eine der drei Leitungen der Vorrichtung an den Behälter angeschlossen ist. Die Ansteuerung kann elektronisch erfolgen und vom Auswertmittel aus erfolgen. Durch die Ventilstellung des ansteuerbaren Dreifachventils wird sichergestellt, dass jeweils nur eine der drei Leitungen mit dem Behälter verbunden ist, und somit die einzelnen Verfahrensschritte beim Prüfen des Filterelements hinreichend voneinander getrennt sind.

Gemäß einer Ausführungsform weist die Vorrichtung drei ansteuerbare Anschlussventile auf zum wahlweisen Verbinden von entweder einer Füllleitung, einer Kompaktierleitung oder der Druckmesszelle mit einem ersten Behälter, in dem ein erstes zu prüfendes Filterelement anordenbar ist, mit einem zweiten Behälter, in dem ein zu prüfendes zweites Filterelement anordenbar ist, und mit einem dritten Behälter, in dem ein zu prüfendes drittes Filterelement anordenbar ist. Bei den drei ansteuerbaren Anschlussventilen kann es sich insbesondere um ansteuerbare Dreifachventile handeln, mit denen die Anschlüsse der Leitungen zu den unterschiedlichen Behältern geregelt werden können. Die Ansteuerung der Anschlussventile kann über das Auswertmittel erfolgen. Durch Verwendung von drei ansteuerbaren Anschlussventilen können drei unterschiedliche Filterelemente zeitgleich geprüft werden, wobei die einzelnen Verfahrensschritte versetzt zueinander durchgeführt werden können, wie oben im Zusammenhang mit dem Verfahren beschrieben. Der erste Behälter, der zweite und dritte Behälter können dabei als Teil der Vorrichtung ausgebildet sein, in dem das bzw. die Filterelemente zur Überprüfung einseztbar sind. Alternativ kann die Vorrichtung auch lediglich die Anschlüsse mit dem einen ansteuerbaren Dreifachventil oder den drei ansteuerbaren Anschlussventilen aufweisen, an den bzw. an die der erste Behälter bzw. alle drei Behälter mit den zu prüfenden Filterelementen anschließbar sind.

Ein Aspekt betrifft die Verwendung der Vorrichtung gemäß des voranstehenden Aspekts zum Durchführen des Verfahrens gemäß dem ersten Aspekt oder einer bevorzugten Ausführungsform hiervon. Die voranstehend beschriebene Vorrichtung kann somit insbesondere dazu benutzt werden, das eingangs beschriebene Verfahren durchzuführen.

Die Erfindung wird nachfolgend anhand von einem in einer Figur gezeigten Ausführungsbeispiel näher beschrieben. Andere Ausführungsformen können die in der Figur gezeigten Elemente teilweise oder voll umfänglich aufweisen. Es zeigen:
- Figur 1: einen Schaltungsaufbau einer Vorrichtung zum Durchführen einer Integritätsprüfung eines Filterelements;
- Figur 2: ein Diagramm einer zeitlichen Entwicklung des Volumenstroms durch ein Filterelement;
- Figur 3: ein Diagramm einer zeitlichen Entwicklung des Volumenstroms durch fünf unterschiedliche Filterelemente;
- Figur 4: ein Langzeitdiagramm einer zeitlichen Entwicklung des Fluidvolumens, das durch vier unterschiedliche Filterelemente gedrückt wird und
- Figur 5: ein Langzeitdiagramm einer zeitlichen Entwicklung des Volumenstroms durch fünf unterschiedliche Filterelemente.

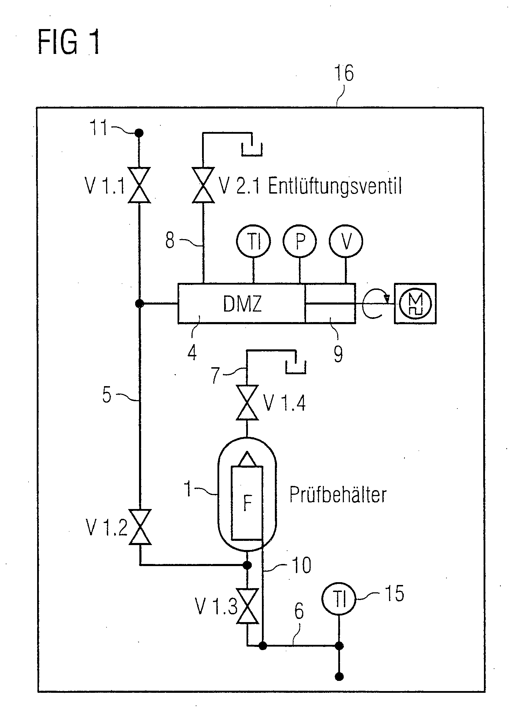

**Figur 1** zeigt eine schematische Darstellung einer Vorrichtung 16 zum Durchführen einer Integritätsprüfung eines Filterelements. Durch die Vorrichtung kann die Integrität eines Filterelements F überprüft werden, das in einem Behälter 1 angeordnet ist.

Die Vorrichtung 16 ist an einen Fluidzufluss 11 angeschlossen. Der Fluidzufluss 11 ist über ein Fluideinlassventil V1.1 regelbar. Über den Fluidzufluss 11 kann ein Fluid in eine Fluidleitung 5 eingeführt werden. Bevorzugt wird dabei RO-Wasser als Fluid verwendet.

Die Fluidleitung 5 ist mit einer Druckmesszelle (DMZ) 4 als besondere Ausgestaltung einer Fluidzufuhr verbunden. Weiterhin ist die Fluidleitung 5 über ein Behälterventil V1.2 mit dem Behälter 1 verbindbar.

Die Druckmesszelle 4 kann mit einem Auswertmittel verbunden sein, das zum Beispiel als PC ausgebildet sein kann. Über das Auswertmittel kann die Druckmesszelle 4 angesteuert werden, insbesondere eine Druckmesszellensteuerung 9 (als eine besondere Ausgestaltung einer Fluidzufuhrsteuerung bzw. -regelung) der Druckmesszelle 4. Weiterhin können über das Auswertmittel die Ventilstellungen der Vorrichtung angesteuert werden.

Der Behälter 1 weist einen Innenraum auf, der über das zugeordnete Behälterventil V1.2und die Fluidleitung 5 mit einem Medium gefüllt werden kann. Der Innenraum des Behälters 1 ist über ein dem Behälter 1 zugeordnetes Auslassventil V1.3 entleerbar. Über das Auslassventil V1.3 ist der Behälter 1 mit einer Entleerungsleitung 6 verbindbar. Die Temperatur des Mediums in der Entleerungsleitung 6 kann von einem Temperaturfühler 15 gemessen werden, der ein Einhalten und/oder Regeln einer Mindestdampftemperatur ermöglichen kann. Der Temperaturfühler 15 ist an der Entleerungsleitung 6 als kältester Punkt der Vorrichtung 16 angeordnet.

Im Inneren des Behälters 1 ist ein Filterelement F so angeordnet, dass durch das Filterelement F diffundiertes Medium über eine Ausgangsleitung 10 aus dem Behälter 1 ausgelassen wird. Diese Ausgangsleitung 10 kann mit der Entleerungsleitung 6 verbunden sein. Als Medium ist dabei bevorzugt das Fluid aus der Fluidleitung 5 vorgesehen.

Die Vorrichtung 16 dient als Prüfanlage zur Durchführung eines Water-Flow-Tests, kurz: WFT.

Die Vorrichtung 16 weist einen Prüfplatz mit dem Behälter 1 auf, der der Druckmesszelle 4 zugeordnet ist.

Das Auswertmittel kann als Versorgungsmodul und/oder Steuerungsmodul ausgebildet sein und eine Energieversorgung, eine speicherprogrammierbare Steuerung (kurz: SPS) und/oder ein human machine interface (kurz: HMI) aufweisen. Die Auswerteeinheit kann auch zur Steuerung mehrerer Vorrichtungen 16 verwendet werden, wobei jeder Vorrichtung einen Behälter für jeweils ein zu prüfendes Filterelement aufweisen kann. Zu prüfende Filterelemente, die z.B. als Filterkerze ausgebildet sind, haben einen anderen Kompaktierungsumfang als Filterelemente, die z.B. als Filterkapseln ausgebildet sind.

Die konstruktive Gestaltung einiger oder aller Vorrichtungsteile, einschließlich der Sensorik, kann am Kriterium der Bedampfbarkeit ausgerichtet sein. Das bedeutet, dass jedes Bestandteil der Vorrichtung dazu ausgebildet und vorgesehen ist, Wasserdampf unter einem vorgegebenen Druck, bei einer vorgegebenen Temperatur und für einen vorgegebenen Zeitraum ausgesetzt zu werden. Die Vorrichtungsteile können zum Beispiel dazu ausgelegt sein, bei einem Druck von 2,5 bar für 20 Minuten bei 124°C mit Reinstdampf bedampft zu werden.

Die Bauteile der Vorrichtung können Ventilstutzen aufweisen, deren Länge maximal dem zweifachen ihres Innendurchmessers entspricht. Die Leitungen können ein Gefälle aufweisen, um eine vollständige Entleerbarkeit zu ermöglichen.

Die Vorrichtung mitsamt Ventilsitzen kann frei von Hohlräumen, Toträumen und/oder Sacklöchern ausgebildet sein. Dies reduziert die Gefahr einer Verkeimung und einer Korrosion in Folge von Pfützenbildung in der Vorrichtung.

Die in der Vorrichtung verwendeten Ventile können als pneumatische, Medien getrennte Membranventile ausgebildet sein. Die Ventile können totraumarm im Messkreislauf angeordnet werden. Weiterhin können die Ventile über Klampverbinder eingebaut sein, um ein Austauschen einzelner Ventile zu ermöglichen.

Sämtliche vorhandene Schweißverbindungen der Vorrichtung, die in Kontakt mit dem Prüfmedium (also dem Fluid) stehen, können als Orbitalschweißung ausgebildet sein, insbesondere mit einem Rohr-Nenndurchmesser DN10 nach DIN32676.

Die Sensorik sowie die gesamte Messeinrichtung kann einen Überhitzungsschutz aufweisen.

Ein Gehäuseverschluss der Vorrichtung kann in einer Aufnahme mit elektrisch ansteuerbaren Linearführungen angeordnet sein. Die Linearführungen können sich am Gestell der Vorrichtung in eine XY-Richtung justieren und fest verschrauben lassen. Dadurch wird eine Zentrierung des Verschlusses der Vorrichtung im Bereich seiner Verriegelung ermöglicht.

Die Vorrichtung kann steif ausgeführt sein, insbesondere eine Steifigkeit des Messkreislaufes aufweisen, um messwertverfälschende, konstruktionsbedingte Volumenänderungen zu vermeiden. Dazu kann zum Beispiel das Entlüftungsventil starr mit dem Gehäusedeckel der Vorrichtung verbunden sein.

Die Vorrichtung kann so ausgebildet sein, dass Verschleißteile und/oder Sensoren leicht zugänglich ausgebildet sind und gegebenenfalls einfach demontiert werden können. Dies vereinfacht Wartungs- und/oder Kalibrierarbeiten. Dazu können zum Beispiel kodierte, verwechslungssichere Steckverbindungen verwendet werden und/oder Wechselplatten für die notwendige Sensorik.

Das Auswertmittel kann ein Bedienpaneel mit optischer Gut/Schlecht-Anzeige und einem integrierten USB-Anschluss für einen möglichen späteren Einsatz von Barcode-Lesern an jeder Station aufweisen. Das Auswertmittel kann über eine Ethernet-Schnittstelle mit TCP-IP angeschlossen sein.

Der Behälter 1 kann einen Füllstandsindikator aufweisen, der im tiefsten Punkt des Gehäuses des Behälters 1 angeordnet ist. Damit kann durch den Füllstandsindikator überprüft werden, ob das Prüfgehäuse vollständig entleert ist.

Im Raumgebiet der Druckmesszelle 4 kann ein Temperatursensor angeordnet sein, mit dem die Temperatur des Prüfmediums, also des Fluids, überwacht werden kann. Die Druckmesszelle 4 kann einen Schrittmotor aufweisen, über den eine Füllstandskontrolle der Druckmesszelle 4 durchgeführt werden kann.

Der Behälter 1 kann ein Füllvolumen aufweisen, das auf bestimmte zu prüfende Filterelemente abgestimmt ist. Dabei kann das Füllvolumen des Behälters möglichst klein gehalten werden, um Fluid zu sparen, das nach jeder Prüfung verworfen werden kann. Der Behälter kann unter Verwendung von Blindvolumen für kleine Bauhöhen ausgebildet sein.

Der Prüfvorgang kann unter Verwendung von zwei Handtastern initialisiert werden. Durch geeignete Sicherheitseinrichtungen kann sichergestellt werden, dass sich zwischen Prüfgehäuse und Verriegelung keine Körperteile eines Bedieners befinden.

Der Behälter 1 kann über eine Behälterentlüftungsleitung 7 entlüftet werden. Die Behälterentlüftungsleitung 7 kann über ein Entlüftungsventil V1.3 des Behälters geregelt werden.

Ähnlich kann die Druckmesszelle 4 über eine Druckmesszellenentlüftungsleitung 8 entlüftet werden. Die Druckmesszellenentlüftungsleitung 8 kann über ein Entlüftungsventil V2.1 der Druckmesszelle geregelt werden.

Die Auswerteinheit kann einen Messalgorithmus anwenden, der softwaregesteuert ist und eine SPS enthält. Dabei kann die Druckmesszelle 4 so angesteuert werden, dass sie eine kontinuierliche Messreihe aufnimmt, die die Messwerte Druck, absolutes Volumen und Temperatur registriert. Die Anzahl und Zeitfolge der einzelnen Messwerte können über die Software vorgegeben werden. Aus den einzelnen Messwerten des absoluten Volumens pro Zeit kann für jeden Messzeitpunkt ein gleitender, inkrementeller Volumenstrom berechnet werden, dessen zeitlicher Kurvenverlauf degressiv fallend ist. Dieser kann als Integritätskenngröße für das zu prüfende Filterelement verwendet werden.

Die Druckmesszelle 4 kann ebenfalls über die Fluidleitung 5 befüllt werden. Die Druckmesszelle 4 sollte nur gefüllt werden, wenn keine Messung durchgeführt wird. Die Druckmesszelle 4 kann einen Schrittmotor mit einem Inkrementalstellungsrückmelder aufweisen. Der Inkrementalstellungsrückmelder kann der Ausweiteinheit signalisieren, wenn die Druckmesszelle 4 nicht mehr ausreichend Fluid aufweist, um den Messvorgang fortzusetzen. Der Inkrementalstellungsrückmelder kann also anzeigen, dass die Druckmesszelle 4 aufgefüllt werden muss. In diesem Fall kann der nächste regulär anstehende Befüllungsvorgang mit einer entsprechenden Meldung unterbunden werden, bis keine Messung innerhalb eines betrachteten Dreifachmoduls mehr ansteht..

Die Integrität des der Filterelements F wird geprüft, wenn der Behälter 1, in dem das Filterelement F angeordnet ist, über das ihm zugeordnete Behälterventil V1.2. mit der Druckmesszelle 4 verbunden ist. Dabei wird an der Druckmesszelle 4 der Volumenstrom und/oder die Volumenstromänderung gemessen, der und/oder die zur Aufrechterhaltung des Prüfdrucks im Behälter 1 des Filterelements F benötigt wird. Dabei kann entweder das genau berechnete Volumen bestimmt werden, und/oder eine Anzahl von Inkrementschritten bzw. -indizes am Motor der Druckmesszelle 4 zur Bestimmung verwendet werden. Der gemessene Volumenstrom und/oder die Volumenstromänderung kann am Auswertmittel mit durch Hüllkurven vorgegebenen Grenzwerten verglichen werden. Daraus kann eine finale prognostizierte Integrationskenngröße ermittelt werden für den erwarteten, sich einstellenden kontinuierlichen Volumenstrom des Fluids zur Aufrechterhaltung des spezifischen Prüfdrucks im ersten Behälter 1. Dabei können die Lage und die mathematische Beschreibung der Hüllkurven charakteristisch sein für den betrachteten Filtertyp des Filterelements. Auch können ein oder mehrere Hüllkurven anhand von Referenzmessdaten von Referenzfilterelementen ermittelt werden und für den o.g. Vergleich herangezogen werden.

### Bestimmen einer Integritätskeringröße für das Filterelement

Für das im Behälter 1 angeordnete Filterelement F wird eine Integritätskenngröße bestimmt. Als Integritätskenngröße kann z.B. der Volumenstrom durch das Filterelement F verwendet werden, der sich beim Kompaktieren des Filterelements F auf einen Prüfdruck einstellt. Der Volumenstrom betrifft das Volumen an Fluid, dass durch das Filterelement F strömt. Der Volumenstrom kann direkt an der Fluidzufuhr abgelesen werden, also z.B. der Druckmesszelle 4.

In dem Verfahren können zunächst alle ggf. vorhandenen Ventile geöffnet werden und das Fluid eingefüllt werden. Dabei wird der Behälter sowie die zur Durchführung des Verfahrens verwendete Vorrichtung entlüftet. Unter anderem füllt sich dabei die Druckmesszelle und die Kompaktierung des Filterelements beginnt.

Anschließend wird über den Schrittmotor der Druckmesszelle ein spezifischer Prüfdruck von z.B. etwa 2,5 bar eingestellt. Dabei können die Inkrementschritte des Schrittmotors das Volumen angeben, dass zum Aufrechterhalten des spezifischen Prüfdrucks im Behälter notwendig ist. Dadurch können das Volumen sowie der Volumenstrom direkt erfasst werden. Die Inkrementschritte bzw. der Index einer Druckmesszelle (als besondere Fluidzufuhr) können z.B. in etwa 1 µl (oder kleiner) Schritten ausgebildet sein und sind somit sehr genau.

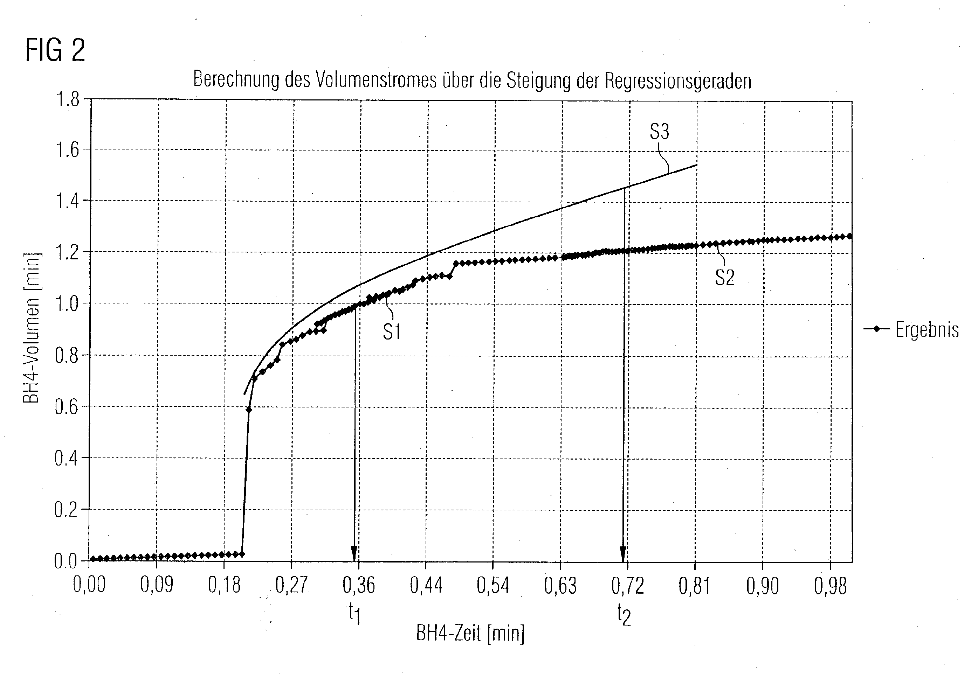

In **Figur 2** ist in einem Diagramm ein exemplarischer Verlauf des Volumenstroms durch ein solches Filterelement in Milliliter (ml) pro Zeiteinheit in Minuten (min) gezeigt. Die dargestellten Rauten zeigen Messergebnisse an einem beispielhaften Filterelement BH4.

Bereits an einem ersten Zeitpunkt t1 (im Ausführungsbeispiel nach ca. 0,36 min) stellt sich eine erste Steigung s1 des Volumenstroms ein, die ca. s1=1,6 g/min beträgt. An einem späteren zweiten Zeitpunkt t2 (im Ausführungsbeispiel nach ca. 0,72 min) stellt sich eine zweite Steigung s2 des Volumenstroms ein, die ca. s2=0,2 g/min beträgt. Dabei ist die zweite Steigung s2 deutlich kleiner als die erste Steigung s1. Allgemein ist bei einem integeren Filterelement zu erwarten, dass die Steigung des Volumenstroms beim Kompaktieren abnimmt.

Zum Vergleich ist in Figur 2 eine beispielhafter Verlauf des Volumenstroms eingezeichnet, der nach einer Anfangszeit eine Steigung s3=1,6 g/min beibehält. Dieser Verlauf des Volumenstroms deutet darauf hin, dass das Filterelement nicht integer ist. Beim zweiten Zeitpunkt t2 liegt deswegen der Volumenstrom des nichtintegeren Filterelements bereits deutlich über dem Volumenstromverlauf eines Filterelements gleichen Bautyps.

In diesem Beispiel kann somit bereits zum zweiten Zeitpunkt t2 eine Aussage darüber getroffen werden, ob das Filterelement den Integritätstest bestehen wird oder nicht.

Insbesondere wird dabei die Integritätskenngröße bei zunehmendem Volumenstrom bestimmt, und somit lange bevor das Filterelement kompaktiert ist und sich ein nahezu konstanter Volumenstrom an Fluid durch das Filterelement einstellt, der zum Aufrechterhalten des spezifischen Prüfdrucks im Behälter benötigt wird.

Das Abschätzen der Integritätskenngröße kann z.B. bei Erreichen einer bestimmten Krümmung des Volumenstroms erfolgen. Dabei kann der Kurvenverlauf des Volumenstroms mit einer zu erwartenden Vergleichskurve verglichen werden. Dazu können mehrere Messwerte über die Zeit ermittelt werden, die mit zugeordneten Vergleichswerten verglichen werden. Die Messwerte können in definierten Zeitintervallen ermittelt werden.

Zumindest ein Charakteristikum der Messkurve, wie z.B. Absolutwert, Steigung, Standardabweichung, Abweichung von Mittelwerten etc., kann mit Referenz- bzw. Vergleichswerten verglichen werden. Ebenso kann eine Mehrzahl solcher Charakteristika mit Referenz- bzw. Vergleichswerten verglichen werden. Beim Vergleich kann eine Korrelation zwischen Messwerten und vorbekannten Vergleichswerten ermittelt werden. Dabei kann insbesondere eine Streuung bzw. Standardabweichung bewertet werden.

Die Messwerte können z.B. mit Hüllkurven verglichen werden. Dies ist insbesondere bei gestreuten Messwerten sinnvoll. Dabei können aufeinander zulaufende Hüllkurven verwendet werden, deren Abstand zueinander über die Zeit abnimmt. Die Streuung der Messwerte sollte bei fortschreitender Kompaktierung des Filterelements ebenfalls abnehmen, weswegen insbesondere aufeinander zulaufende bzw. konvergierende bzw. sich relativ zueinander progressiv nähernde Hüllkurven einen guten Vergleich ermöglichen.

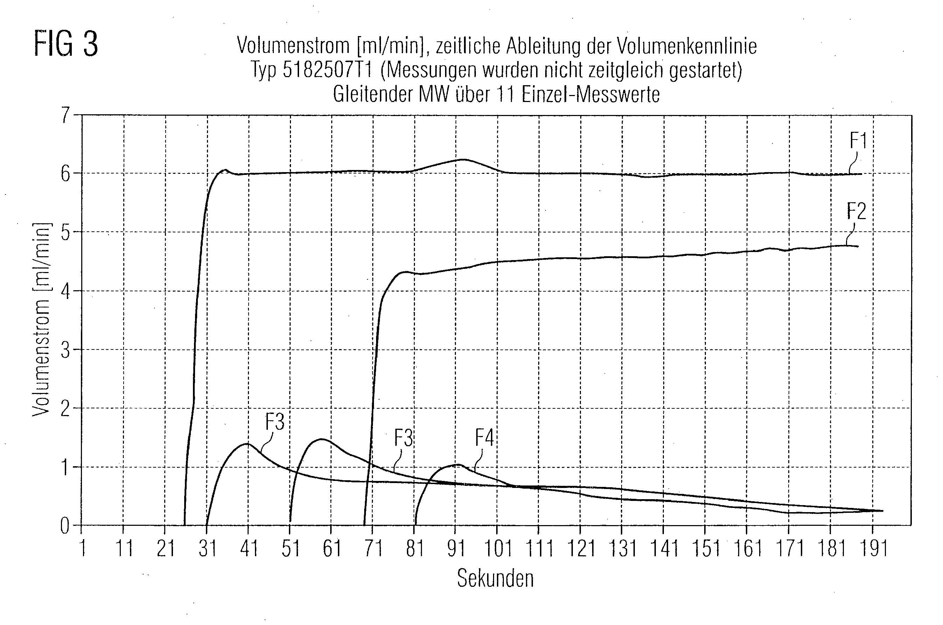

**Figur 3** zeigt in einem Diagramm den zeitlichen Verlauf des Volumenstroms fünf unterschiedlicher Filterelemente über einen etwas längeren Zeitraum. Der Volumenstrom zweier Filterelemente F1 und F2 steigt dabei relativ schnell und relativ hoch an, auf über 4 ml/min, und bleibt bei einem konstant hohen Wert. Diese beiden geprüften Filterelemente F1 und F2 sind nicht integer, was am sich einstellenden Volumenstrom abgelesen werden kann.

Der Volumenstrom dreier anderer Filter ist ebenfalls im Diagramm der Figur 3 gezeigt. Der Volumenstrom der Filter F3, F4 und F5 steigt zunächst stark an, erreicht ein Maximum und nimmt danach wieder ab, wonach sich nach einer Weile ein nahezu konstanter Volumenstrom deutlich unter 1 ml/min einstellt. Diese drei Filter F3-F5 sind integer und werden einen Integritätstest bestehen.

Die Messungen an den fünf getesteten Filterelementen F1-F5 wurden zeitversetzt begonnen, weswegen deren Volumenströme zu unterschiedlichen Zeitpunkten beginnen zu steigen.

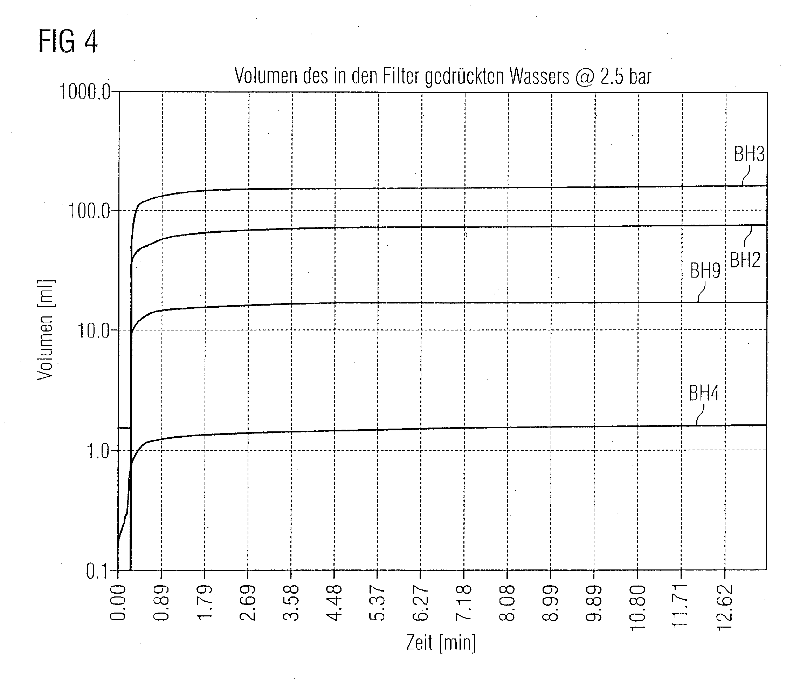

**Figur 4** zeigt in einem Langzeitdiagramm das zugeführte Volumen an in unterschiedliche Filterelemente BH2, BH3, BH4 und BH9 gedrücktem Fluid. Im Versuch wurde Fluid bei einem Prüfdruck von 2,5 bar in den Behälter gedrückt. Das Volumen ist auf einer logarithmischen Skala in ml gezeigt und nimmt anfangs stark zu, während es nach einem kurzen Zeitraum nahezu konstant bleibt (auf der logarithmischen Skala).

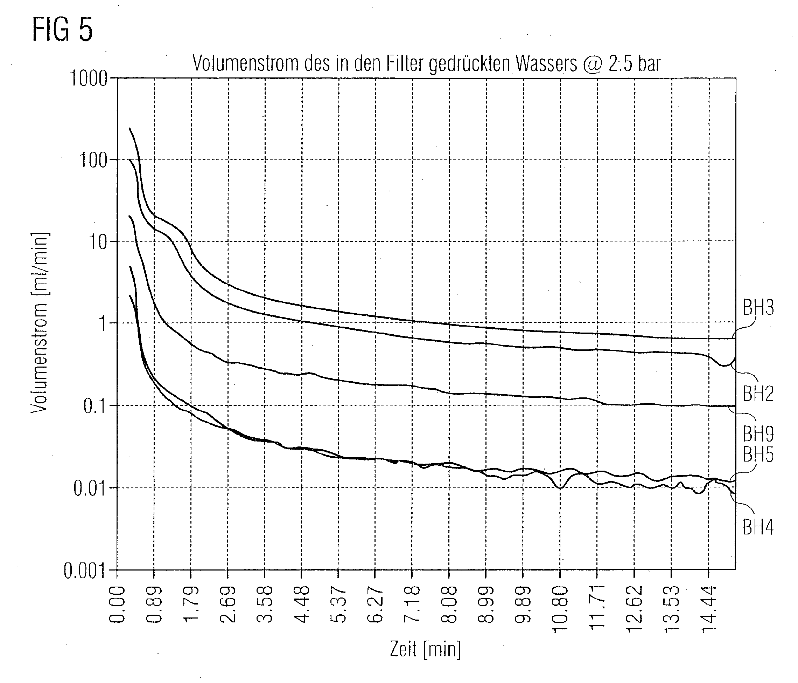

**Figur 5** zeigt in einem Langzeitdiagramm den beim selben Versuch ermittelten Volumenstrom durch Filterelemente BH2, BH3, BH4, BH5 und BH9. Der Volumenstrom ist ebenfalls in einer logarithmischen Skala gezeigt und nimmt schnell und stark ab.

Wie in den Figuren gezeigt, kann der Volumenstrom durch das Filter und/oder das Volumen des durchgedrückten Filters als Beispiel einer Integritätskenngröße des Filterelements verwendet werden. Noch während sich der Volumenstrom ändert, insbesondere noch während der Volumenstrom zunimmt, kann bereits die Integritätskenngröße für das Filterelement ermittelt werden. Dies steigert die Geschwindigkeit des Verfahrens sehr.

### CIP Prozess

Die komplette Vorrichtung kann gelegentlich einem "cleaning in place" Prozess unterzogen werden, kurz: CIP Prozess. Dies dient der Vermeidung von Verkeimung der Anlage, die mit RO-Wasser als Fluid betrieben werden kann. Der CIP Prozess kann mit einer Komplettentleerung sämtlicher Anlagenteile beginnen. Anschließend wird die Vorrichtung sterilisiert unter Bedampfung über 20 Minuten mit Dampf bei einer Temperatur von zwischen etwa 110°C und etwa 130°C, insbesondere von etwa 121°C. Anschließend kann die Vorrichtung mittels Druckluft abgekühlt werden und mit RO-Wasser gespült werden. Dadurch wird die Vorrichtung in den regulären Betriebszustand versetzt.

Die Entleerung der Anlage kann wie im regulären Prüfungsverfahren mittels Druckluft bei 0,8 barg erfolgen, wobei auch die Druckmesszelle 4 komplett geleert wird.

Dabei kann der Dampf an alle Bauteile der Vorrichtung geleitet werden, die mit dem Prüfmedium (also dem RO-Wasser) in Kontakt kommen. Dazu kann ein Zylinder der Druckmesszelle 4 vollständig geöffnet werden. Beim Bedampfen gegebenenfalls anfallendes Kondensat aus der Dampfleitung wird unmittelbar vor dem Bedampfen über einen Kondensatabscheider am Dampfzulauf der Anlage abgeleitet.

Durch das Abkühlen mit Druckluft bis auf ca. 80°C wird eine schlagartige Unterdruckbildung durch einen Kondensationsprozess des in der Anlage verbliebenen Restdampfes vermieden.

### Parameter eines Ausführungsbeispiels

Im Folgenden sind einige Prozessparameter für eine Vorrichtung gemäß einem Ausführungsbeispiel angegeben:
- Betriebsdruck von ca. 6 barg Überdruck;
- Prüfdruck bei ca. 2,5 barg Überdruck;
- Fluidzufluss an RO-Wasser;
- Abwasseranschluss mit Siphon und Ablassventil V20;
- Dampfzufluss mit einer Bedampfung mit 124°C bei 2,5 bar, entsprechend 1,5 barg Überdruck;
- Ethernet-Netzwerkanschluss;
- 230 Volt-Anschluss;
- Datenausgabe als gedrucktes Messwertprotokoll einschließlich der verwendeten Programmparameter und der Auftragsdaten wie Material, Auftragsnummer und Chargen-Nummer), zum Beispiel als *.txt Datei;
- Schnittstelle für eine Datenbankanbindung, zum Beispiel über SQL, um über die Datenbank Prüfprogramme für mehrere im Einsatz befindliche Anlagen zentral verwalten zu können und zur Speicherung der Messwerte.

### Bezugszeichenliste

- 1: Behälter
- 4: Druckmesszelle (Fluidzufuhr)
- 5: Fluidleitung
- 6: Entleerungsleitung
- 7: Behälterentlüftungsleitung
- 8: Druckmesszellenentlüftungsleitung
- 9: Druckmesszellensteuerung
- 10: Ausgangsleitung
- 11: Fluidzufluss
- 15: Temperaturfühler
- 16: Vorrichtung
- F: Filterelement
- F1, F2, F3, F4, F5: Filterelement
- BH2, BH3, BH4, BH5, BH9: Filterelement
- V1.1: Fluideinlassventil
- V1.2: Behälterventil
- V1.3: Auslassventil
- V1.4: Entlüftungsventil des Behälters
- V2.1: Entlüftungsventil der Druckmesszelle
- s1: erste Steigung
- s2: zweite Steigung
- s3: dritte Steigung
- t1: erster Zeitpunkt
- t2: zweiter Zeitpunkt

## Patentansprüche

1. Verfahren zur Durchführung einer Integritätsprüfung eines Filterelements, welches als Sterilfilterelement mit einer hydrophoben Membran ausgebildet ist, mit den Schritten:
- eingangsseitiges Füllen zumindest eines Behälters (1), in dem ein zu prüfendes Filterelement (F) angeordnet ist, mit einem wässrigen Fluid,
- Einstellen des Drucks des Fluids im Behälter (1) auf einen vorbestimmten spezifischen Prüfdruck, wobei ein Kompaktieren des Filterelements (F) beginnt,
- Aufrechterhalten des spezifischen Prüfdrucks im Behälter (1) unter kontrolliertem Nachfüllen von Fluid in den Behälter (1),
- Bestimmen einer prognostizierten und/oder abgeschätzten Integritätskenngröße für das Filterelement (F) in Abhängigkeit vom kontrollierten Nachfüllen von Fluid in den Behälter (1) bevor sich ein kontinuierlicher Volumenstrom an Fluid einstellt, der zum Aufrechterhalten des spezifischen Prüfdrucks im Behälter (1) benötigt wird, wobei die Integritätskenngröße ermittelt wird, während das Filterelement (F) kompaktiert wird und bevor das Filterelement (F) kompaktiert ist,
- Treffen einer Aussage darüber, ob die prognostizierte und/oder abgeschätzte Integritätskenngröße unterhalb eines filterspezifischen und/oder vordefinierten Integritätsgrenzwerts für den Filtertyp des Filterelements liegen wird oder nicht, bevor das Filterelement (F) kompaktiert ist;
wobei die Integritätskenngröße abhängt von zumindest einem Charakteristikum einer Änderung des Volumenstroms an Fluid, der zum Aufrechterhalten des spezifischen Prüfdrucks im Behälter (1) benötigt wird.

2. Verfahren nach einem der vorangegangenen Ansprüche, wobei die Integritätskenngröße innerhalb von maximal neun Minuten nach dem Beginn des Füllens des Behälters (1) bestimmt wird.

3. Verfahren nach einem der vorangegangenen Ansprüche, wobei das kontrollierte Nachfüllen von Fluid in den Behälter (1) mittels einer Druckmesszelle (4) erfolgt.

4. Verfahren nach Anspruch 3, wobei mittels eines Schrittmotors der Druckmesszelle (4) ein Druckkolben so betätigt wird, dass im Behälter (1) der spezifische Prüfdruck aufrechterhalten wird.

5. Verfahren nach einem der vorangegangenen Ansprüche, wobei die Integritätskenngröße durch eine mathematische Abschätzung bestimmt wird.

6. Verfahren nach Anspruch 5, wobei die Integritätsprüfung beendet wird, wenn die Abschätzung ergibt, dass das zu prüfende Filterelement (F) die Integritätsprüfung mit einer vorbestimmten Wahrscheinlichkeit besteht oder nicht besteht.

7. Verfahren nach Anspruch 5, wobei die Abschätzung durch eine mathematische Prognose eines sich einstellenden Volumenstroms des Fluids mittels Hüllkurven erfolgt, wobei die Hüllkurven auf das zu prüfende Filterelement (F) abgestimmt sind.

8. Verfahren nach einem der vorangegangenen Ansprüche, wobei das kontrollierte Nachfüllen von Fluid in den Behälter (1) mit einer Genauigkeit von kleiner etwa 10 µl erfolgt.

9. Vorrichtung zum Durchführen einer Integritätsprüfung eines Filterelements, welches als Sterilfilterelement mit einer hydrophoben Membran ausgebildet ist, mit einem Behälter (1), in dem ein zu prüfendes Filterelement (F) anordenbar ist, mit
- zumindest einer Leitung (5), mit der ein wässriges Fluid eingangsseitig in den Behälter (1) so einfüllbar ist, dass der Druck des Fluids auf einen spezifischen Prüfdruck einstellbar ist, wobei ein Kompaktieren des Filterelements (F) beginnt,
- einer Fluidzufuhr (4), die den spezifischen Prüfdruck im Behälter (1) aufrecht erhält indem die Fluidzufuhr kontrolliert Fluid in den Behälter (1) nachfüllt, und
- einem Auswertmittel, das in Abhängigkeit vom kontrolliert in den Behälter (1) nachgefüllten Fluid eine prognostizierte und/oder abgeschätzte Integritätskenngröße für das Filterelement (F) bestimmt während das Filterelement (F) kompaktiert wird und bevor das Filterelement (F) kompaktiert ist und eine Aussage darüber trifft, ob die prognostizierte und/oder abgeschätzte Integritätskenngröße unterhalb eines filterspezifischen und/oder vordefinierten Integritätsgrenzwerts für den Filtertyp des Filterelements liegen wird oder nicht, bevor das Filterelement (F) kompaktiert ist und sich ein kontinuierlicher Volumenstrom an Fluid einstellt, der zum Aufrechterhalten des spezifischen Prüfdrucks im Behälter (1) benötigt wird;
wobei das Auswertmittel die Integritätskenngröße abschätzt in Abhängigkeit von zumindest einem Charakteristikum einer Änderung des Volumenstroms an Fluid, der beim Aufrechterhalten des spezifischen Prüfdrucks benötigt wird.

10. Vorrichtung nach Anspruch 9, wobei die Fluidzufuhr (4) mit einer Genauigkeit von 0,1 µl bis 10 µl Fluid in den Behälter (1) nachfüllt und/oder das Volumen des Behälters mit einer Genauigkeit von 0,1 µl bis 10 µl verändert.

11. Vorrichtung nach Anspruch 9 oder 10, wobei die Fluidzufuhr (4) als Druckmesszelle (4) mit einem Schrittmotor ausgebildet ist, der ein Druckkolben so betätigt, dass im Behälter (1) der spezifische Prüfdruck im Wesentlichen aufrechterhalten wird, wobei das Auswertmittel bevorzugt eine Schrittzahl des Schrittmotors der Druckmesszelle (4) als Kenngröße des Volumens an Fluid verwendet, das zur Aufrechterhaltung des spezifischen Prüfdrucks durch das Filterelement (F) strömt.

12. Vorrichtung nach einem der Ansprüche 9 bis 11, wobei die Vorrichtung einen Druckminderer und/oder einen Durchflussminderer aufweist, der den Druck und/oder den Durchfluss des Fluids in einer Fluidleitung (5) reduziert.

13. Verwendung der Vorrichtung nach einem der Ansprüche 9 bis 12 zum Durchführen des Verfahrens nach einem der Ansprüche 1 bis 8.

## Claims

1. A method for carrying out an integrity test on a filter element that is designed as a sterile filter element with a hydrophobic membrane, comprising the steps:
- at the input side, adding an aqueous fluid to at least one container (1) in which a filter element (F) to be tested is arranged,
- adjusting the pressure of the fluid in the container (1) to a predetermined specific test pressure, wherein compression of the filter element (F) starts,
- maintaining the specific test pressure in the container (1) during the controlled replenishment of fluid in the container (1),
- determining a forecast and/or estimated integrity parameter for the filter element (F) depending on the controlled replenishment of fluid in the container (1) before a continuous volumetric flow of fluid occurs that is needed to maintain the specific test pressure in the container (1), wherein the integrity parameter is ascertained while the filter element (F) is being compressed and before the filter element (F) is compressed,
- drawing a conclusion as to whether the forecast and/or estimated integrity parameter will or will not lie below a filter-specific and/or predefined integrity limit value for the filter type of the filter element before the filter element (F) is compressed;
wherein the integrity parameter depends on at least one characteristic of a change in the volumetric flow of the fluid that is needed to maintain the specific test pressure in the container (1).

2. The method according to one of the preceding claims, wherein the integrity parameter is determined within a maximum of nine minutes after the beginning of the filling of the container (1).

3. The method according to one of the preceding claims, wherein fluid is replenished in the container (1) in a controlled manner by means of a pressure measuring cell (4).

4. The method according to claim 3, wherein a thrust piston is actuated by means of a stepping motor of the pressure measuring cell (4) so that the specific test pressure is maintained in the container (1).

5. The method according to one of the preceding claims, wherein the integrity parameter is determined by a mathematical estimation.

6. The method according to claim 5, wherein the integrity test is ended when the estimation reveals that the filter element (F) to be tested has or has not passed the integrity test with a predetermined probability.

7. The method according to claim 5, wherein the estimation is carried out by a mathematical forecast of an arising volumetric flow of the fluid by means of envelope curves, wherein the envelope curves are matched with the filter element (F) to be tested.

8. The method according to one of the preceding claims, wherein fluid is replenished in the container (1) in a controlled manner with a precision of less than approximately 10 µL.

9. A device for performing an integrity test of a filter element that is designed as a sterile filter element with a hydrophobic membrane, and having a container (1) in which a filter element (F) to be tested can be arranged, comprising:
- at least one line (5) with which an aqueous fluid can be added at the input side to the container (1) such that the pressure of the fluid can be set to a specific test pressure, wherein a compression of the filter element (F) begins,
- a fluid supply (4) that maintains the specific test pressure in the container (1) in that the fluid supply replenishes the container (1) with fluid in a controlled manner, and
- an evaluating means that determines a forecast and/or estimated integrity parameter for the filter element (F) depending on the fluid replenished in a controlled manner in the container (1) while the filter element (F) is being compressed and before the filter element (F) is compressed, and that draws a conclusion as to whether the forecast and/or estimated integrity parameter will or will not lie below a filter-specific and/or predefined integrity limit value for the filter type of the filter element before the filter element (F) is compressed and a continuous volumetric flow of fluid occurs that is needed to maintain the specific test pressure in the container (1);
wherein the evaluating means estimates the integrity parameter depending on at least one characteristic of a change in the volumetric flow of the fluid that is needed to maintain the specific test pressure.

10. The device according to claim 9, wherein the fluid supply (4) replenishes fluid in the container (1) with a precision of 0.1 µL to 10 µL, and/or the volume of the container changes with a precision of 0.1 µL to 10 µL.

11. The device according to claim 9 or 10, wherein the fluid supply (4) is designed as a pressure measuring cell (4) with a stepping motor that actuates a thrust piston so that the specific test pressure is substantially maintained in the container (1), wherein the evaluating means preferably uses a number of steps of the stepping motor of the pressure measuring cell (4) as a parameter of the volume of fluid that flows through the filter element (F) to maintain the specific test pressure.

12. The device according to one of claims 9 to 11, wherein the device has a pressure reducer and/or a flow reducer that reduces the pressure and/or the flow of the fluid in a fluid line (5).

13. A use of the device according to one of claims 9 to 12 for carrying out the method according to one of claims 1 to 8.

## Revendications

1. Procédé pour réaliser un essai d'intégrité d'un élément filtrant, lequel est conçu sous la forme d'un élément filtrant stérile avec une membrane hydrophobe, comprenant les étapes suivantes :
- le remplissage du côté de l'entrée d'au moins un récipient (1), dans lequel un élément filtrant à tester (F) est disposé, à l'aide d'un fluide aqueux,
- le réglage de la pression du fluide dans le récipient (1) sur une pression d'essai spécifique prédéterminée, dans lequel une compression de l'élément filtrant (F) commence,
- le maintien de la pression d'essai spécifique dans le récipient (1) moyennant le remplissage d'appoint contrôlé du fluide dans le récipient (1),
- la détermination d'un paramètre d'intégrité prévu et/ou estimé de l'élément filtrant (F) en fonction du remplissage d'appoint contrôlé du fluide dans le récipient (1) avant qu'un flux volumétrique continu de fluide s'établisse, qui est requis pour maintenir la pression d'essai spécifique dans le récipient (1), dans lequel le paramètre d'intégrité est calculé pendant que l'élément filtrant (F) se comprime et avant que l'élément filtrant (F) soit comprimé,
- l'établissement d'une assertion, selon laquelle le paramètre d'intégrité prévu et/ou estimé va se situer ou non en dessous d'une valeur limite d'intégrité prédéfinie et/ou spécifique du filtre applicable au type de filtre de l'élément filtrant avant que l'élément filtrant (F) soit comprimé ;
dans lequel le paramètre d'intégrité dépend au moins d'une caractéristique d'une variation du flux volumétrique de fluide, qui est requis pour maintenir la pression d'essai spécifique dans le récipient (1).

2. Procédé selon l'une des revendications précédentes, dans lequel le paramètre d'intégrité est déterminé en l'espace de neuf minutes au maximum après le début du remplissage du récipient (1).

3. Procédé selon l'une des revendications précédentes, dans lequel le remplissage d'appoint contrôlé du fluide dans le récipient (1) s'effectue au moyen d'une cellule de mesure de pression (4).

4. Procédé selon la revendication 3, dans lequel un piston de compression est actionné au moyen d'un moteur pas à pas de la cellule de mesure de pression (4), de sorte que la pression d'essai spécifique est maintenue dans le récipient (1).

5. Procédé selon l'une des revendications précédentes, dans lequel le paramètre d'intégrité est déterminé par une estimation mathématique.

6. Procédé selon la revendication 5, dans lequel le test d'intégrité s'achève lorsque l'estimation révèle que l'élément filtrant à tester (F) réussit ou non le test d'intégrité avec une probabilité prédéterminée.

7. Procédé selon la revendication 5, dans lequel l'estimation est effectuée par une prévision mathématique d'un flux volumétrique du fluide à s'établir à l'aide de courbes enveloppantes, dans lequel les courbes enveloppantes concordent avec l'élément filtrant à tester (F).

8. Procédé selon l'une des revendications précédentes, dans lequel le remplissage d'appoint contrôlé du fluide dans le récipient (1) s'effectue avec une précision inférieure à environ 10 µl.

9. Dispositif pour réaliser un essai d'intégrité d'un élément filtrant, lequel est conçu sous la forme d'un élément filtrant stérile avec une membrane hydrophobe, doté d'un récipient (1), dans lequel un élément filtrant à tester (F) peut être disposé, présentant
- au moins une conduite (5), par laquelle un fluide aqueux est remplissable du côté de l'entrée dans le récipient (1), de sorte que la pression du fluide est réglable sur une pression d'essai spécifique, dans lequel une compression de l'élément filtrant (F) commence,
- une unité d'alimentation de fluide (4), qui maintient la pression d'essai spécifique dans le récipient (1), puisque l'unité d'alimentation de fluide assure le remplissage d'appoint contrôlé du fluide dans le récipient (1), et
- un moyen d'évaluation, qui détermine un paramètre d'intégrité prévu et/ou estimé de l'élément filtrant (F) en fonction du fluide rempli en appoint de manière contrôlée dans le récipient (1) pendant que l'élément filtrant (F) se comprime et avant que l'élément filtrant (F) soit comprimé et qui établit une assertion, selon laquelle le paramètre d'intégrité prévu et/ou estimé va se situer ou non en dessous d'une valeur limite d'intégrité prédéfinie et/ou spécifique du filtre applicable au type de filtre de l'élément filtrant avant que l'élément filtrant (F) soit comprimé et avant qu'un flux volumétrique continu de fluide s'établisse, qui est requis pour maintenir la pression d'essai spécifique dans le récipient (1) ;
dans lequel le moyen d'évaluation estime le paramètre d'intégrité en fonction d'au moins une caractéristique d'une variation du flux volumétrique de fluide, qui est requis pour maintenir la pression d'essai spécifique.

10. Dispositif selon la revendication 9, dans lequel l'unité d'alimentation de fluide (4) remplit le fluide en appoint dans le récipient (1) avec une précision de 0,1 µl à 10 µl et/ou fait varier le volume du récipient avec une précision de 0,1 µl à 10 µl.

11. Dispositif selon la revendication 9 ou 10, dans lequel l'unité d'alimentation de fluide (4) est conçue sous la forme d'une cellule de mesure de pression (4) dotée d'un moteur pas à pas, qui actionne un piston de compression, de sorte que la pression d'essai spécifique est sensiblement maintenue dans le récipient (1), dans lequel le moyen d'évaluation utilise de préférence un nombre de pas du moteur pas à pas de la cellule de mesure de pression (4) comme paramètre du volume de fluide, qui s'écoule à travers l'élément filtrant (F) pour maintenir la pression d'essai spécifique.

12. Dispositif selon l'une des revendications 9 à 11, dans lequel le dispositif présente un régulateur de pression et/ou un limiteur de débit, qui réduit ou réduisent la pression et/ou le débit du fluide dans une conduite de fluide (5).

13. Utilisation du dispositif selon l'une des revendications 9 à 12 pour exécuter le procédé selon l'une des revendications 1 à 8.
